# EUROPÄISCHE PATENTSCHRIFT

(11) **EP 3 108 603 B1**
(45) Veröffentlichungstag und Bekanntmachung des Hinweises auf die Patenterteilung: **24.04.2019**
(21) Anmeldenummer: 15701746.8
(22) Anmeldetag: 22.01.2015
(51) Int. Cl.: H04L 12/26, G06F 13/42, G06F 11/07, H04L 1/00, H04L 12/40

(54) **TEILNEHMERSTATION FÜR EIN BUSSYSTEM UND VERFAHREN ZUR ERHÖHUNG DER DATENRATE EINES BUSSYSTEMS**
PARTICIPANT STATION FOR A BUS SYSTEM, AND METHOD FOR INCREASING THE DATA RATE OF A BUS SYSTEM
POSTE UTILISATEUR POUR SYSTÈME DE BUS ET PROCÉDÉ D'AUGMENTATION DU DÉBIT DE DONNÉES D'UN SYSTÈME DE BUS

(30) Priorität: 17.02.2014 DE 102014202826
(43) Veröffentlichungstag der Anmeldung: 28.12.2016
(73) Patentinhaber: Robert Bosch GmbH, 70442 Stuttgart (DE)
(72) Erfinder: MACHAUER, Ralf, 71642 Ludwigsburg (DE); WEISSENMAYER, Simon, 74223 Flein (DE)
(86) Internationale Anmeldenummer: PCT/EP2015/051232
(87) Internationale Veröffentlichungsnummer: WO 2015/121043

(56) Entgegenhaltungen:
- WO-A2-01/45317
- US-A1- 2004 150 516
- SITTE H: "SENSOR-ACTUATOR BUS", SCIENTIFIC HONEYWELLER, HONEYWELL'S CORPORATE. MINNEAPOLIS, US, Bd. 11, Nr. 1, 21. September 1991 (1991-09-21), Seiten 41-47, XP000289740, ISSN: 0196-8440

## Beschreibung

Die vorliegende Erfindung betrifft eine Teilnehmerstation für ein Bussystem und ein Verfahren zur Erhöhung der Datenrate eines Bussystems, bei welchen Fehler bei der Datenübertragung nicht dazu führen, dass die Datenübertragung durch Teilnehmerstationen abgebrochen wird, die an der Datenübertragung nicht beteiligt sind.

### Stand der Technik

Für die Kommunikation zwischen Sensoren und Steuergeräten hat das CAN-Bussystem eine weite Verbreitung gefunden. Beim CAN-Bussystem werden Nachrichten mittels des CAN-Protokolls übertragen, wie es in der CAN-Spezifikation in der ISO11898 beschrieben ist. Im Zuge der wachsenden Zahl intelligenter Sensoren und der stärkeren Vernetzung der Steuergeräte im Fahrzeug wächst die Anzahl der Teilnehmerstationen am CAN-Bus und das Datenaufkommen auf dem CAN-Bus immer weiter an.

DE10 000 305 A1 beschreibt das CAN (Controller Area Network) sowie eine als TTCAN (Time Trigger CAN = zeit-getriggertes CAN) bezeichnete Erweiterung des CAN. Das beim CAN verwendete Medienzugriffssteuerverfahren beruht auf einer bitweisen Arbitrierung. Bei CAN wird die bitweise Arbitrierung anhand eines führenden Identifiers innerhalb der über den Bus zu übertragenden Nachricht vorgenommen.

Wie bereits in der DE 10 2012 200 997 beschrieben, können bei der bitweisen Arbitrierung mehrere Teilnehmerstationen gleichzeitig Daten über das Bussystem übertragen, ohne dass hierdurch die Datenübertragung gestört wird.

Die Veröffentlichung "Sensor-Actuator Bus" von Hans Sitte (Scientific Honeyweller, Honeywell's Corporate, Minneapolis, US, Bd. 11, Nr. 1, 21.September 1991, S. 41-47) beschreibt ein Master-Slave-Bussystem für Sensoren und Aktuatoren mit einer Nachrichtenprüfung und Fehlerüberwachung, ohne dass Zeitpunkte für ein Abtasten eines Bits einer Nachricht abhängig von dem in der Nachricht umfassten Nachrichten-Identifizierer eingestellt werden. Die internationale Offenlegungsschrift WO 01/45317 A2 beschreibt ein drahtloses Übertragungssystem, nämlich ein Mobilfunksystem, bei welchem ein Sender Nachrichten in seine Umgebung aussendet und potenzielle Empfänger in der Umgebung auswerten, ob die Nachricht für sie bestimmt ist. Nur ein bestimmter Empfänger prüft die Nachricht und führt gegebenenfalls eine Fehlerbehandlung durch.

Ein ähnliches System findet sich in der Offenlegungsschrift US20040150516. In jüngster Zeit wurden Techniken vorgeschlagen, wie beispielsweise CAN-FD, bei welchem Nachrichten entsprechend Spezifikation "CAN with Flexible Data-Rate, Specification Version 1.0" (Quelle http://www.semiconductors.bosch.de) übertragen werden, usw. Bei solchen Techniken wird die maximal mögliche Datenrate durch Einsatz einer höheren Taktung im Bereich der Datenfelder über einen Wert von 1 MBit/s hinaus gesteigert. Mit CAN-FD ist eine Erhöhung der Datenrate für Systeme möglich, bei welchen die Datenrate bisher durch die Buslänge der Systeme begrenzt war.

Für die reflexionsfreie und damit schnelle Datenübertragung spielt die Bustopologie eine große Rolle. Im idealen Fall gibt es nur zwei CAN-Teilnehmerstationen am CAN-Bus. In diesem Fall können die Busenden ideal abgeschlossen und Leitungsreflexionen vermieden werden. Um Übertragungskabel zu sparen und die Vorteile des CAN-Protokolls wirklich nutzen zu können, ist es in der Praxis jedoch gewünscht, möglichst viele CAN-Teilnehmerstationen an einen Bus anzuschließen.

Problematisch ist jedoch, dass an jeder Abzweigung der Datenleitungen Reflexionen bei der Datenübertragung entstehen. Diese Reflexionen überlagern sich mit den originalen Signalen und stören den Empfang der Empfänger. Je größer die Reflexionen sind, umso langsamer muss die Datenrate gewählt werden, um das Signal noch zuverlässig übertragen zu können.

Zur Gewährleistung der sicheren Übertragung sieht das CAN-Protokoll eine Fehlerbehandlung vor, die auch Error Handling genannt ist. Gemäß dem Error Handling überprüft jede CAN-Teilnehmerstation alle Signale auf dem CAN-Bus und bricht bei erkanntem Fehler die Übertragung mit einem Fehlerrahmen ab, der auch Error Frame genannt ist. Selbst die CAN-Teilnehmerstationen, die an der Kommunikation unbeteiligt sind, weil sie beispielsweise die über den CAN-Bus übertragenen Signale gar nicht weiterverarbeiten, greifen in die Kommunikation von Sender und Empfänger ein.

Die auf dem CAN-Bus auftretenden Störsignale wirken sich auf die CAN-Teilnehmerstationen unterschiedlich stark aus. Der Einfluss der Störungen ist umso größer, je stärker das Nutzsignal im Vergleich zu den Störungen gedämpft ist. Generell gilt, je kürzer die Leitung zwischen Störquelle und Empfänger und je länger die Leitung zwischen Sender und Empfänger umso schlechter die Signalqualität. Dadurch kann es vorkommen, dass der Empfänger das Signal fehlerfrei empfangen könnte, während eine an der Kommunikation unbeteiligte CAN-Teilnehmerstation einen Fehler erkennt und das Signal durch eine Fehlermeldung zerstört. Dies hat zur Folge, dass der Sender das Signal erneut senden muss, was die Buslast auf dem CAN-Bus unnötig erhöht und die Datenübertragung unnötig verlangsamt.

Um ein fehlerhaftes Signal sicher erkennen zu können, ist in den allermeisten Fällen die Auswertung des CRC-Signals ausreichend.

Außerdem ist es möglich, eine noch höhere Datenrate zu erzielen, indem innerhalb des CAN-Rahmens die Datenübertragung analog zu Datenübertragungsprotokollen erfolgt, wie beispielsweise Ethernet. Solche Protokolle können derzeit jedoch nicht ohne weiteres zum Einsatz kommen.

Ein weiteres Problem besteht darin, dass bei der Auslegung eines CAN-Netzwerks oder Bussystems für jede einzelne Teilnehmerstation eingestellt wird, zu welchen Zeitpunkten ein Bit abgetastet werden soll. Diese Einstellung wird auch als Bit Timing bezeichnet. Je nachdem von welcher Teilnehmerstation das Signal empfangen wird, sind andere Zeitpunkte für den fehlerfreien Empfang optimal. Allerdings können die Zeitpunkte nicht abhängig von der sendenden Teilnehmerstation variiert werden. Daher muss bei der Auslegung eines CAN-Netzwerks oder Bussystems ein Kompromiss für die besten Zeitpunkte unter Berücksichtigung aller Teilnehmerstationen gefunden werden. Insbesondere bei der Auslegung eines Netzwerks mit mehreren CAN-FD-Teilnehmern ist es schwierig, die Zeitpunkte so einzustellen, dass alle Teilnehmer das Signal fehlerfrei empfangen können. Wenn kein geeigneter Zeitpunkt gefunden werden kann, muss als Lösung dafür die Datenrate des Busses reduziert werden.

### Offenbarung der Erfindung

Es ist Aufgabe der vorliegenden Erfindung, eine Teilnehmerstation für ein Bussystem und ein Verfahren bereitzustellen, welche die zuvor genannten Probleme lösen. Insbesondere sollen eine Teilnehmerstation für ein Bussystem und ein Verfahren bereitgestellt werden, bei welchen Störungen auf dem CAN-Bus keine Erhöhung der Buslast auf dem CAN-Bus und somit eine Verringerung der Datenrate der Datenübertragung zur Folge haben und die Auslegung des CAN-Netzwerks oder Bussystems vereinfacht wird.

Die Aufgabe wird durch eine Teilnehmerstation für ein Bussystem mit den Merkmalen des Anspruchs 1 gelöst. Die Teilnehmerstation umfasst eine Kommunikationssteuereinrichtung zur Steuerung einer Kommunikation der jeweiligen Teilnehmerstation, eine Sende-/Empfangseinrichtung zum Empfangen von Nachrichten von mindestens einer weiteren Teilnehmerstation des Bussystems über das Bussystem, bei welchem Bussystem die Nachrichten jeweils einen Nachrichten-Identifizierer haben, wobei die Nachrichten-Identifizierer zur Arbitrierung in der Arbitrierungsphase genutzt werden, wobei nach der Arbitrierung nur noch eine Teilnehmerstation der Teilnehmerstationen Signale in der Form einer oder mehrerer der Nachrichten auf eine Busleitung sendet, so dass zumindest zeitweise ein exklusiver, kollisionsfreier Zugriff einer Teilnehmerstation auf die Busleitung des Bussystems gewährleistet ist, eine Prüfeinrichtung zur Prüfung, ob eine empfangene Nachricht für die Teilnehmerstation bestimmt ist oder nicht, und eine Fehlerbehandlungseinrichtung zur Fehlerbehandlung der empfangenen Nachricht, nur wenn die Prüfung durch die Prüfeinrichtung ergibt, dass die empfangene Nachricht für die Teilnehmerstation bestimmt ist.

Gemäß der Erfindung ist die Prüfeinrichtung zur Ausgabe des in der empfangenen Nachricht umfassten Nachrichten-Identifizierers der Teilnehmerstation an die Kommunikationssteuereinrichtung der Teilnehmerstation ausgestaltet, so dass die Kommunikationssteuereinrichtung Zeitpunkte für ein Abtasten eines Bits der empfangenen Nachricht abhängig von dem in der Nachricht umfassten Nachrichten-Identifizierer einstellt.

Bei der Teilnehmerstation wird verhindert, dass Signale, die von bestimmten Empfängern korrekt empfangen werden können, durch Teilnehmerstationen zerstört werden, die an der Datenübertragung unbeteiligt sind. Dadurch wird ein breiterer Einsatz von CAN-FD und eine höhere maximale Datenrate auf einem CAN-Bus als bisher erreicht. Zudem ist die Auslegung eines CAN-Netzwerks oder Bussystems vereinfacht, da es mit der Teilnehmerstation nicht mehr erforderlich ist, ein Bit Timing durchzuführen.

Somit ist die Teilnehmerstation auch für den Einsatz in höher getakteten Systemen, wie beispielsweise CAN-FD, usw., geeignet. Die zuvor beschriebene Teilnehmerstation eignet sich zum Einsatz von CAN-FD auch bei Anwendungen, bei denen bisher keine weitere Erhöhung der Datenrate möglich war. Solche Anwendungen sind beispielsweise Bustopologien, bei welchen CAN-FD aufgrund von Leitungsreflexionen bisher nicht einsetzbar war. In vielen Fällen ist es ausreichend, nur diejenigen Teilnehmerstationen auf die zuvor beschriebene Weise auszugestalten, die besonders stark von Leitungsreflexionen betroffen sind.

Darüber hinaus kann mit der zuvor beschriebenen Teilnehmerstation die maximal übertragbare Datenrate bei CAN-FD erhöht werden.

Ein weiterer Vorteil besteht darin, dass mit der zuvor beschriebenen Teilnehmerstation eine Erhöhung der Datenrate durch das Senden von Nachrichten analog zu anderen Datenübertragungsprotokollen, wie beispielsweise Ethernet, usw., wesentlich einfacher realisierbar ist.

Außerdem ist die zuvor beschriebene Teilnehmerstation sehr vorteilhaft bei Anwendungen, sogenannte Off-Highway-Anwendungen, bei welchen nach und nach von unterschiedlichen Herstellern immer mehr Teilnehmerstationen an die Busleitung angeschlossen werden. Mit der Teilnehmerstation, welche die beschriebene selektive Fehlerbehandlung (Error Handling) ausführt, ist das Bussystem robuster gegenüber dem nachträglichen Anschluss weiterer Teilnehmerstationen.

Vorteilhafte weitere Ausgestaltungen der Teilnehmerstation sind in den abhängigen Ansprüchen beschrieben.

Die Prüfeinrichtung kann zum Prüfen ausgestaltet sein, ob die empfangene Nachricht ein vorbestimmtes Bitmuster aufweist, welches umfasst, dass die empfangene Nachricht für die Teilnehmerstation bestimmt ist oder nicht für die Teilnehmerstation bestimmt ist.

Die Prüfeinrichtung kann auch dahingehend ausgestaltet sein, dass sie ihre Prüfung anhand des in der empfangenen Nachricht umfassten Nachrichten-Identifizierers ausführt. Hierbei kann die Prüfeinrichtung in einer Variante dahingehend ausgestaltet sein, dass sie bei ihrer Prüfung Nachrichten für die Teilnehmerstation ausblendet, welche einen Nachrichten-Identifizierer mit einem vorbestimmten Bitmuster aufweisen oder nicht aufweisen.

Die Fehlerbehandlungseinrichtung kann derart ausgestaltet sein, dass sie keine Fehlerbehandlung ausführt, wenn die Prüfung durch die Prüfeinrichtung ergibt, dass die empfangene Nachricht nicht für die Teilnehmerstation bestimmt ist, und dass sie einen Fehlerrahmen ausgibt, wenn die Prüfung durch die Prüfeinrichtung ergibt, dass die empfangene Nachricht für die Teilnehmerstation bestimmt ist und die Fehlerbehandlungseinrichtung einen Fehler der empfangenen Nachricht erkennt.

Möglicherweise ist die Einrichtung eine Sende-/Empfangseinrichtung, die zudem zum Senden einer Nachricht über das Bussystem an mindestens eine weitere Teilnehmerstation des Bussystems ausgestaltet ist, wobei die Nachricht ein vorbestimmtes Bitmuster im Nachrichten-Identifizierer aufweist.

Die zuvor beschriebene Teilnehmerstation kann Teil eines Bussystems sein, das eine Busleitung, und mindestens zwei Teilnehmerstationen aufweist, welche über die Busleitung derart miteinander verbunden sind, dass sie miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Erhöhung der Datenrate eines Bussystems gelöst. Das Verfahren umfasst die Schritte, Empfangen, mit einer Sende-/Empfangseinrichtung der Teilnehmerstation, einer Nachricht von einer weiteren Teilnehmerstation des Bussystems über das Bussystem, bei welchem Bussystem zumindest zeitweise ein exklusiver, kollisionsfreier Zugriff einer Teilnehmerstation auf eine Busleitung des Bussystems gewährleistet ist, Prüfen, mit einer Prüfeinrichtung, ob die empfangene Nachricht für die Teilnehmerstation bestimmt ist oder nicht, und Fehlerbehandeln, mit einer Fehlerbehandlungseinrichtung, der empfangenen Nachricht, nur wenn die Prüfung durch die Prüfeinrichtung ergibt, dass die empfangene Nachricht für die Teilnehmerstation bestimmt ist.

Bei dem Verfahren kann die Prüfeinrichtung beim Ein- und Ausschalten der Fehlerbehandlungseinrichtung eine Speichereinrichtung verwenden, wobei die Speichereinrichtung oder eine weitere Speichereinrichtung verwendet wird, wenn die empfangene Nachricht auf ein Ausblenden von vorbestimmten empfangenen Nachrichten für die Teilnehmerstationen aus anderen Gründen als für die Fehlerbehandlung geprüft wird.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Beispiel einer Liste, die von einer Teilnehmerstation gemäß dem ersten Ausführungsbeispiel verwendet wird.
Fig. 3 ein Flussdiagramm eines Verfahrens gemäß dem ersten Ausführungsbeispiel;
Fig.4 ein Flussdiagramm eines Verfahrens gemäß einem zweiten Ausführungsbeispiel; und
Fig. 5 ein vereinfachtes Blockschaltbild eines Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

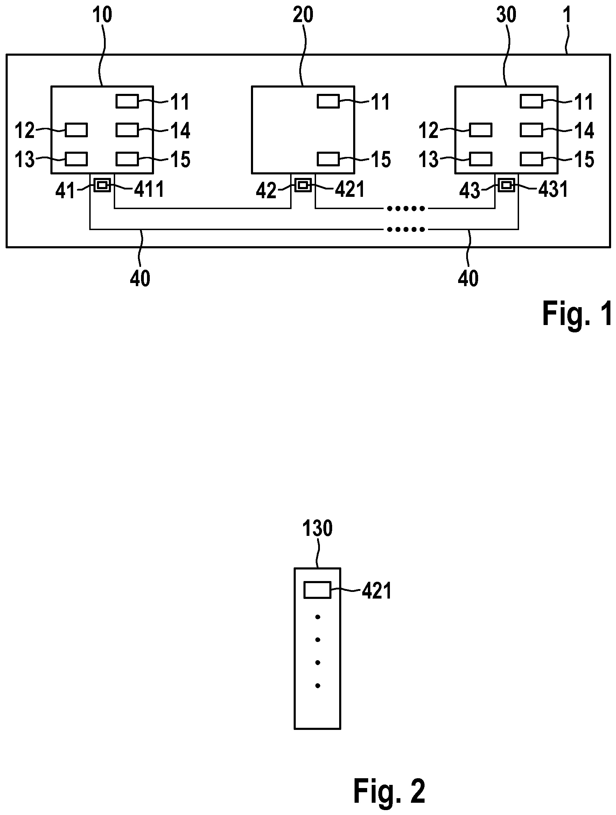

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an eine Busleitung 40 angeschlossen sind. Über die Busleitung 40 können Nachrichten 41, 42, 43 in der Form von Signalen zwischen den einzelnen Teilnehmerstationen 10, 20, 30 übertragen werden. Die Nachrichten 41, 42, 43 haben jeweils einen von Nachrichten-Identifizierern (Nachrichten-Identifier) 411, 421, 431, der bei CAN-Bussystemen auch als CAN-ID bezeichnet wird. Die Teilnehmerstationen 10, 20, 30 können beispielsweise Steuergeräte oder Anzeigevorrichtungen oder Sensoren eines Kraftfahrzeugs sein.

Wie in Fig. 1 gezeigt, hat die Teilnehmerstation 10 eine Kommunikationssteuereinrichtung 11, eine Prüfeinrichtung 12, eine Speichereinrichtung 13, eine Fehlerbehandlungseinrichtung 14 und eine Sende-/Empfangseinrichtung 15. Die Teilnehmerstation 20 hat dagegen eine Kommunikationssteuereinrichtung 11 und eine Sende-/Empfangseinrichtung 15. Die Teilnehmerstation 30 hat, wie die Teilnehmerstation 10, eine Kommunikationssteuereinrichtung 11, eine Prüfeinrichtung 12, eine Speichereinrichtung 13, eine Fehlerbehandlungseinrichtung 14 und eine Sende-/Empfangseinrichtung 15. Die Sende-/Empfangseinrichtungen 15 der Teilnehmerstationen 10, 20, 30 sind jeweils direkt an die Busleitung 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über die Busleitung 40 mit einer anderen Teilnehmerstation der an die Busleitung 40 angeschlossenen Teilnehmerstationen 10, 20, 30. Die Prüfeinrichtung 12, die Speichereinrichtung 13 und die Fehlerbehandlungseinrichtung 14 dienen zur Erhöhung der Datenrate auf der Busleitung 40 für von der Sende-/Empfangseinrichtung 15 empfangenen Nachrichten 41, 42, 43 und zur Vereinfachung der Auslegung des Bussystems 1, wie später noch ausführlicher beschrieben. Die Kommunikationssteuereinrichtung 11 kann wie ein herkömmlicher CAN-Controller ausgeführt sein. Die Sende-/Empfangseinrichtung 15 kann in Bezug auf ihre Sendefunktionalität, wie ein herkömmlicher CAN-Transceiver ausgeführt sein. Demzufolge kann mit den beiden Teilnehmerstationen 10, 30 die Datenrate auf der Busleitung 40 erhöht und die Auslegung des Bussystems 1 vereinfacht werden. Die Teilnehmerstation 20 entspricht hingegen sowohl in Bezug auf ihre Sende- als auch ihre Empfangsfunktionalität einer herkömmlichen CAN-Teilnehmerstation.

In einem CAN-Bussystem sind mehrere Teilnehmerstationen 10, 20, 30 aktiv, welche ihre Nachrichten 41, 42, 43 mit Nachrichten-Identifizierer (Nachrichten-Identifier) 411, 421, 431 aussenden. Diese Nachrichten-Identifizierer 411, 421, 431 werden zur Arbitrierung in der Arbitrierungsphase genutzt. Nach der Arbitrierung sendet nur noch eine Teilnehmerstation der Teilnehmerstationen 10, 20, 30 Signale in der Form einer oder mehrerer der Nachrichten 41, 42, 43 auf die Busleitung 40. Ab diesem Moment kann jede hörende Teilnehmerstation 10, 20, 30 die Bussignale bzw. Nachrichten 41, 42, 43 beobachten.

Empfängt beispielsweise die Sende-/Empfangseinrichtung 15 der Teilnehmerstation 10 eine Nachricht 42, prüft die Prüfeinrichtung 12 der Teilnehmerstation 10 anhand des in der Nachricht 42 enthaltenen Nachrichten-Identifizierers 421, ob die Nachricht 42 für die Teilnehmerstation 10 bestimmt ist oder nicht. Hierbei vergleicht die Prüfeinrichtung 12 den Nachrichten-Identifizierer 421 der empfangenen Nachricht 42 mit einem oder mehreren Nachrichten-Identifizierern, welcher oder welche in der Speichereinrichtung 13 gespeichert sind.

Fig. 2 zeigt eine Liste 130, in welcher die in der Speichereinrichtung 13 gespeicherten Nachrichten-Identifizierer abgelegt sein können. Die Liste 130 kann auch in Form eines Arrays usw. ausgestaltet sein. In Fig. 2 ist bei dem vorliegenden Ausführungsbeispiel nur der Nachrichten-Identifizierer 421 gespeichert. In der Liste 130 könnten bei Bedarf auch weitere Nachrichten-Identifizierer gespeichert werden, wie durch die Punkte in der Liste 130 dargestellt. Die Liste 130 gibt an, dass die Nachrichten 42 der Teilnehmerstation 20 nicht für die Teilnehmerstation 10 bestimmt sind und daher nicht mit der Fehlerbehandlungseinrichtung 14 behandelt werden sollen. In einer Modifikation des vorliegenden Ausführungsbeispiels kann die Liste 130 auch angeben, dass die Nachrichten 42 der Teilnehmerstation 20 für die Teilnehmerstation 10 bestimmt sind und daher mit der Fehlerbehandlungseinrichtung 14 behandelt werden sollen.

Somit ist die Teilnehmerstation 10 derart ausgestaltet, dass sie zwar die Nachrichten 42 von der Teilnehmerstation 20 empfängt, jedoch keine Fehlerbehandlung für diese ausführt. Die Fehlerbehandlung wird nur für Nachrichten 43 von der Teilnehmerstation 30 und anderen in dem Bussystem 1 möglicherweise vorhandenen Teilnehmerstationen ausgeführt, die jedoch hier nicht dargestellt sind. In einer Modifikation des vorliegenden Ausführungsbeispiels kann die Teilnehmerstation 10 auch derart ausgestaltet sein, dass sie die Nachrichten 42 von der Teilnehmerstation 20 für die Teilnehmerstation 10 ausblendet. Dadurch kann bei der Teilnehmerstation 10 die vorzuhaltende Menge an Empfangsnachrichten möglichst klein gehalten werden, da nicht jede Nachricht 42 einzeln in der Speichereinrichtung 13 der Teilnehmerstation 10 festgehalten wird. Stattdessen werden ganze Identifikationsbereiche einer Teilnehmerstation 10, 20, 30 zugeordnet. Hierbei werden bestimmte ein Signal bildende Nachrichten, in dem vorliegenden Fall bei der Teilnehmerstation 10 die Nachrichten 42, ausgeblendet. Dadurch werden die Nachrichten 42 nicht in einer Speichereinrichtung der Teilnehmerstation 10 abgelegt und es wird keine Unterbrechung (Interrupt) der Datenbearbeitung in der Teilnehmerstation 10 ausgelöst.

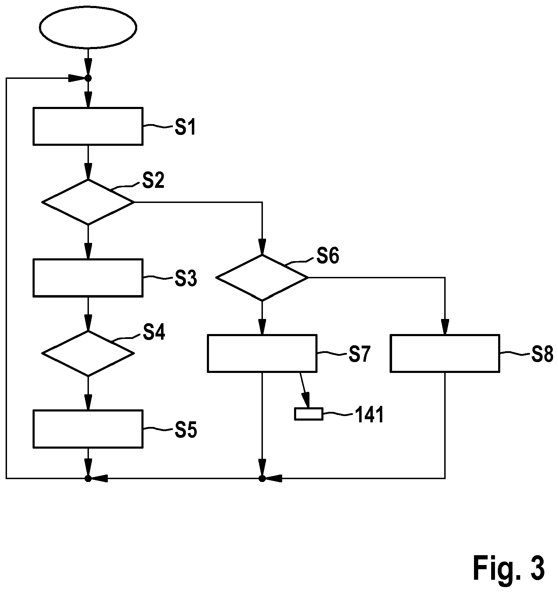

Zum Beispiel kann das Prüfen mit der Prüfeinrichtung 12, das auch für das zuvor beschriebene Ausblenden der Nachrichten 42 verwendbar ist, durch bestimmte Bit-Muster im Nachrichten-Identifizierer geschehen, wie insbesondere
xxxx000xxxx für den Nachrichten-Identifizierer 411 der ersten Teilnehmerstation 10 als erste Teilnehmerstation des Bussystems 1,
xxxx001xxxx für den Nachrichten-Identifizierer 421 der Teilnehmerstation 20 als zweite Teilnehmerstation des Bussystems 1, und
xxxx111xxxx für den Nachrichten-Identifizierer 431 der Teilnehmerstation 30, wenn die Teilnehmerstation 30 die achte Teilnehmerstation des Bussystems 1 ist,
wobei x ein beliebiges Bit des Nachrichten-Identifizierers 411, 412, 413 ist. Erkennt die Prüfeinrichtung 12 unter Verwendung der Liste 130 in der Speichereinrichtung 13, dass die empfangene Nachricht das Bit-Muster xxxx001xxxx als Nachrichten-Identifizierer aufweist, schaltet die Prüfeinrichtung 12 die Fehlerbehandlungseinrichtung 14 aus. Nach einer Zeitspanne, die im Bussystem 1 zum Empfang der Nachricht 42 zur Verfügung steht, schaltet die Prüfeinrichtung 12 die Fehlerbehandlungseinrichtung 14 wieder ein. Dies ist anhand von Fig. 3 näher erläutert.

Fig. 3 zeigt ein Flussdiagramm eines Verfahrens zur Erhöhung der Datenrate eines Bussystems, das von den Teilnehmerstationen 10, 30 des Bussystems 1 ausgeführt wird. Nach dem Beginn des Verfahrens empfängt die Sende-/Empfangseinrichtung 15 der Teilnehmerstation 10 eine Nachricht 42 und speichert diese in einer entsprechenden Speichereinrichtung, beispielsweise der Speichereinrichtung 13. Danach geht der Fluss zu einem Schritt S2 weiter.

Bei dem Schritt S2 prüft die Prüfeinrichtung 12 der Teilnehmerstation 10, ob die Nachricht 42 für die Teilnehmerstation 10 bestimmt ist oder nicht. Hierbei vergleicht die Prüfeinrichtung 12 den Nachrichten-Identifizierer 421 der empfangenen Nachricht 42 mit dem oder den Nachrichten-Identifizierern der Liste 130. Ist der Nachrichten-Identifizierer 421 der empfangenen Nachricht 42 in der Liste 130 enthalten, was bei der in Fig. 2 gezeigten Liste 130 der Fall ist, geht der Fluss zu einem Schritt S3 weiter. Andernfalls geht der Fluss zu einem Schritt S6 weiter.

Bei dem Schritt S3, also wenn die Nachricht 42 nicht für die Teilnehmerstation 10 bestimmt ist, schaltet die Prüfeinrichtung 12 die Fehlerbehandlungseinrichtung 14 der Teilnehmerstation 10 aus. Danach geht der Fluss zu einem Schritt S4 weiter.

Bei dem Schritt S4 wird ermittelt, ob die Zeitspanne abgelaufen ist, die im Bussystem 1 zum Empfang der Nachricht 42 zur Verfügung steht. Ist die Zeitspanne abgelaufen, geht der Fluss zu einem Schritt S5 weiter.

Bei dem Schritt S5 schaltet die Prüfeinrichtung 12 die Fehlerbehandlungseinrichtung 14 der Teilnehmerstation 10 wieder ein. Danach geht der Fluss zu dem Schritt S1 zurück.

Wurde eine andere Nachricht als eine Nachricht 42 empfangen, beispielsweise die Nachricht 43 geht der Fluss zu dem Schritt S6 weiter. Bei dem Schritt S6 ermittelt die Fehlerbehandlungseinrichtung 14 bei ihrer Fehlerbehandlung, ob die empfangene Nachricht 43 fehlerhaft ist oder nicht. Ist die empfangenen Nachricht 43 fehlerhaft, geht der Fluss zu einem Schritt S7 weiter. Andernfalls geht der Fluss zu einem Schritt S8 weiter.

Bei dem Schritt S7 sendet die Fehlerbehandlungseinrichtung 14 über die Sende-/Empfangseinrichtung 15 der Teilnehmerstation 10 einen Fehlerrahmen 141 auf die Busleitung 40 und damit an die anderen Teilnehmerstationen 20, 30. Danach geht der Fluss zu dem Schritt S1 zurück.

Bei dem Schritt S8, also wenn kein Fehler in der Nachricht 43 enthalten ist, gibt die Fehlerbehandlungseinrichtung 14 die Nachricht 43 an die Kommunikationssteuereinrichtung 11 bzw. eine entsprechende Speichereinrichtung weiter, auf welche die Kommunikationssteuereinrichtung 11 zugreift, um die weiteren Daten der Nachricht 43 für die Teilnehmerstation 10 zu bearbeiten. Danach geht der Fluss zu dem Schritt S1 zurück.

Das Verfahren ist beendet, wenn die jeweilige Teilnehmerstation 10, 30 oder das Bussystem 1 ausgeschaltet ist. Insbesondere die Schritte S4 und S5 können auch auf eine andere Weise ausgeführt sein, solange ein selektives Ein- und Ausschalten der Fehlerbehandlungseinrichtung 14 möglich ist, wie zuvor beschrieben..

Somit kann die Fehlerbehandlungseinrichtung 14 und damit die Teilnehmerstation 10 bei dem vorliegenden Ausführungsbeispiel keinen Fehlerrahmen 141 mehr ausgeben, wenn die Teilnehmerstation 20 eine Nachricht 42 über die Busleitung 40 sendet. Zudem kann die Fehlerbehandlungseinrichtung 14 keine Überprüfung der Nachricht 42 mehr auf einen Fehler vornehmen. Die Fehlerbehandlungseinrichtung 14 führt nur noch eine Fehlerbehandlung mit Überprüfung der empfangenen Nachricht auf einen Fehler und Ausgeben eines Fehlerrahmens bei Erkennen eines Fehlers der empfangenen Nachricht durch, wenn die Prüfung durch die Prüfeinrichtung 12 ergibt, dass die empfangene Nachricht für die Teilnehmerstation 10 bestimmt ist.

Die Teilnehmerstation 30 arbeitet auf die gleiche Weise wie die Teilnehmerstation 10.

Auf diese Weise kommt es bei einer fehlerhaften Nachricht im Bussystem 1 nicht mehr zum Abbruch einer Datenübertragung durch die Teilnehmerstationen 10, 30, wenn sie an der Datenübertragung nicht beteiligt sind.

Zudem kann das Bit Timing entfallen, ohne dass die Datenrate deswegen reduziert werden muss.

Die Prüfeinrichtung 12 kann auch den in der Nachricht 41, 42, 43 umfassten Nachrichten-Identifizierer 411, 421, 431 an die Kommunikationssteuereinrichtung 11 ausgeben. Gemäß der Erfindung kann damit die Kommunikationssteuereinrichtung 11 Zeitpunkte für ein Abtasten eines Bits der Nachricht 41, 42, 43 abhängig von dem in der Nachricht 41, 42, 43 umfassten Nachrichten-Identifizierer 411, 421, 431 der jeweiligen Teilnehmerstation 10, 30, 50 einstellen. Dies hat den Vorteil, dass für den Fall, bei welchem bei der Auslegung des Bussystems dennoch ein Bit Timing durchgeführt wird und kein Kompromiss für das Bit Timing gefunden werden kann, dies nicht zur Folge hat, dass dadurch nicht zwangsläufig die Datenrate reduziert werden muss. Insbesondere wenn mehrere CAN-Teilnehmer dasselbe CAN-FD Signal empfangen möchten, ist ein individuelles Bit Timing entsprechend der CAN-ID bzw. dem Nachrichten-Identifizierer, das auch CAN-ID-Individuelles Bit Timing genannt werden kann, von Vorteil.

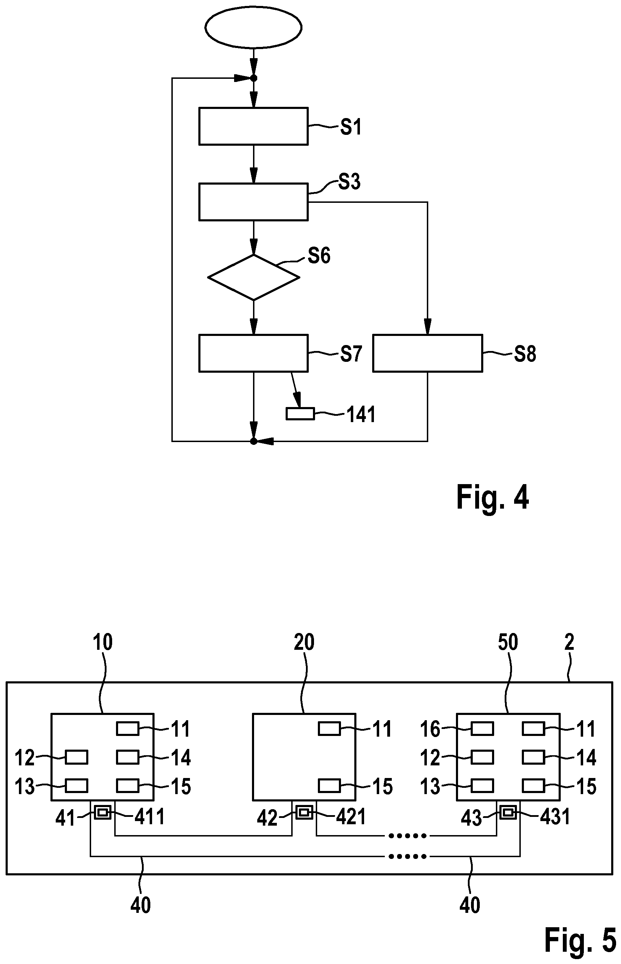

Fig. 4 veranschaulicht die Ausgestaltung der Prüfeinrichtung 12 gemäß einem zweiten Ausführungsbeispiel. Demzufolge schaltet die Prüfeinrichtung 12 eine Fehlerbehandlung durch die Fehlerbehandlungseinrichtung 14 ganz aus. In diesem Fall entfällt bei dem Verfahren zur Erhöhung der Datenrate der Schritt S2, wie in Fig. 4 gezeigt. Zudem schließt sich der Schritt S6 direkt an den Schritt S3 an. Ansonsten ist die Teilnehmerstation 10 aufgebaut, wie bei dem ersten Ausführungsbeispiel beschrieben.

Eine solche Ausgestaltung der Prüfeinrichtung 12 ist beispielsweise für intelligente Sensoren sinnvoll, welche nicht auf den zuverlässigen Empfang angewiesen sind oder ausschließlich Nachrichten senden. Beispiele für solche Sensoren sind bei einem Fahrzeug insbesondere ein Regensensor, ein Öldrucksensor, usw.

Fig. 5 zeigt ein Bussystem 2 gemäß einem dritten Ausführungsbeispiel. Hier verwendet die Prüfeinrichtung 12 einer Teilnehmerstation 50 ihre Speichereinrichtung 13 zum Ein- und Ausschalten der Fehlerbehandlungseinrichtung 14, wie in Bezug auf das erste Ausführungsbeispiel für die Schritte S2 bis S5 beschrieben. Jedoch wird für ein anderes Prüfen der Nachrichten, wie beispielsweise ein Ausblenden von bestimmten Nachrichten für die Teilnehmerstationen 10, 20, 30 aus anderen Gründen als für die Fehlerbehandlung, eine weitere Speichereinrichtung 16 verwendet. Dies hat den Vorteil, dass fehlerhafte Nachrichten, die von der Teilnehmerstation 10 nicht benötigt werden oder für die Teilnehmerstation 10 zwar zur Gewährleistung von Komfortfunktionalitäten interessant sein könnten, nicht zur Verzögerung von sicherheitsrelevanten und zeitkritischen Nachrichten führen. Beispielsweise wird die Ausgabe eines Öldrucksensors oder eines Beleuchtungsfunktionssensors, usw. für einen Scheibenwischerantrieb nicht benötigt.

Demgegenüber verwendet die Prüfeinrichtung 12 der Teilnehmerstation 10 die Speichereinrichtung 13 sowohl zum Ein- und Ausschalten der Fehlerbehandlungseinrichtung 14 als auch zum Prüfen der Nachrichten, wie beispielsweise ein Ausblenden von bestimmten Nachrichten für die Teilnehmerstationen 10, 20, 30 aus anderen Gründen als für die Fehlerbehandlung. In diesem Fall verzögert jede fehlerhafte Nachricht 42, 43, die von der Teilnehmerstation 10 weiterverarbeitet wird, die Kommunikation der nachfolgenden Nachrichten im Bussystem 1.

Ansonsten ist das Bussystem 2 gemäß dem dritten Ausführungsbeispiel wie das Bussystem 1 des ersten Ausführungsbeispiels aufgebaut.

Alle zuvor beschriebenen Ausgestaltungen des Bussystems 1, 2 der Teilnehmerstationen 10, 20,30, 50 und des Verfahrens gemäß dem ersten bis dritten Ausführungsbeispiel können einzeln oder in allen möglichen Kombinationen Verwendung finden. Zusätzlich sind insbesondere folgende Modifikationen denkbar.

Das zuvor beschriebene Bussystem 1, 2 gemäß dem ersten bis dritten Ausführungsbeispiel ist anhand eines auf dem CAN-Protokoll basierenden Bussystems beschrieben. Das Bussystem 1, 2 gemäß dem ersten bis dritten Ausführungsbeispiel kann jedoch auch eine andere Art von Kommunikationsnetz sein. Es ist vorteilhaft, jedoch nicht zwangsläufige Voraussetzung, dass bei dem Bussystem 1, 2 zumindest für bestimmte Zeitspannen ein exklusiver, kollisionsfreier Zugriff einer Teilnehmerstation 10, 20, 30, 50 auf die Busleitung 40 oder einen gemeinsamen Kanal der Busleitung 40 gewährleistet ist.

Das Bussystem 1, 2 gemäß dem ersten bis dritten Ausführungsbeispiel ist insbesondere ein CAN-Netzwerk oder ein CAN FD-Netzwerk oder ein LIN-Netzwerk oder ein FlexRay-Netzwerk.

Die Anzahl und Anordnung der Teilnehmerstationen 10, 20, 30, 50 in den Bussystemen 1, 2 gemäß dem ersten bis dritten Ausführungsbeispiel ist beliebig. Insbesondere können auch nur Teilnehmerstationen 10 oder Teilnehmerstationen 30 oder Teilnehmerstationen 50 in den Bussystemen 1, 2 des ersten bis dritten Ausführungsbeispiels vorhanden sein.

Um eine noch höhere Datenrate zu erzielen, kann innerhalb des CAN-Rahmens der Nachrichten 41, 42, 43 die Datenübertragung analog zu Datenübertragungsprotokollen erfolgen, wie beispielsweise Ethernet, usw.

Die Funktionalität der zuvor beschriebenen Ausführungsbeispiele lässt sich in einem Transceiver bzw. einer Sende-/Empfangseinrichtung 15 bzw. Transceiver oder einem CAN-Transceiver oder einem Transceiver-Chipsatz oder einem CAN-Transceiver-Chipsatz oder auch in einer Kommunikationssteuereinrichtung 11, usw. umsetzen. Zusätzlich oder alternativ kann es in existierende Produkte integriert werden. Insbesondere ist es möglich, dass die betrachtete Funktionalität entweder im Transceiver als separater elektronischer Baustein (Chip) oder in einer integrierten Gesamtlösung, bei welchem nur ein elektronischer Baustein (Chip) vorhanden ist, eingebettet ist.

## Patentansprüche

1. Teilnehmerstation (10; 30; 50) für ein Bussystem (1; 2), mit
einer Kommunikationssteuereinrichtung (11) zur Steuerung einer Kommunikation der jeweiligen Teilnehmerstation (10; 30; 50),
einer Sende-/Empfangseinrichtung (15) zum Empfangen von Nachrichten (41, 42, 43) von mindestens einer weiteren Teilnehmerstation des Bussystems (1; 2) über das Bussystem (1; 2), ,
bei welchem Bussystem (1; 2) die Nachrichten jeweils einen Nachrichten-Identifizierer (411, 421, 431) haben,
wobei die Nachrichten-Identifizierer (411, 421, 431) zur Arbitrierung in der Arbitrierungsphase genutzt werden,
wobei nach der Arbitrierung nur noch eine Teilnehmerstation der Teilnehmerstationen (10, 20, 30) Signale in der Form einer oder mehrerer der Nachrichten (41, 42, 43) auf eine Busleitung (40) sendet, so dass zumindest zeitweise ein exklusiver, kollisionsfreier Zugriff einer Teilnehmerstation (10, 20, 30, 50) auf die Busleitung (40) des Bussystems (1; 2) gewährleistet ist,
einer Prüfeinrichtung (12) zur Prüfung, ob eine empfangene Nachricht (41; 42; 43) für die Teilnehmerstation (10; 30; 50) bestimmt ist oder nicht, und
einer Fehlerbehandlungseinrichtung (14) zur Fehlerbehandlung der empfangenen Nachricht (41; 42; 43), nur wenn die Prüfung durch die Prüfeinrichtung (12) ergibt, dass die empfangene Nachricht (41; 42; 43) für die Teilnehmerstation (10; 30; 50) bestimmt ist,
**dadurch gekennzeichnet, dass** die Kommunikationssteuereinrichtung (11) Zeitpunkte für ein Abtasten eines Bits der empfangenen Nachricht (41, 42, 43) abhängig von dem in der empfangenen Nachricht (41, 42, 43) umfassten Nachrichten-Identifizierer (411, 421, 431) einstellt.

2. Teilnehmerstation (10; 30; 50) nach Anspruch 1, wobei die Prüfeinrichtung (12) zum Prüfen ausgestaltet ist, ob die empfangene Nachricht (41; 42; 43) ein vorbestimmtes Bitmuster aufweist, welches umfasst, dass die empfangene Nachricht (41; 42; 43) für die Teilnehmerstation (10; 30; 50) bestimmt ist oder nicht für die Teilnehmerstation (10; 30; 50) bestimmt ist

3. Teilnehmerstation (10; 30; 50) nach Anspruch 1 oder 2, wobei die Prüfeinrichtung (12) dahingehend ausgestaltet ist, dass sie ihre Prüfung anhand des in der empfangenen Nachricht (41; 42; 43) umfassten Nachrichten-Identifizierers (411; 421; 431) ausführt.

4. Teilnehmerstation (10; 30; 50) nach Anspruch 3, wobei die Prüfeinrichtung (12) dahingehend ausgestaltet ist, dass sie bei ihrer Prüfung Nachrichten (41; 42; 43) für die Teilnehmerstation (10; 30; 50) ausblendet, welche einen Nachrichten-Identifizierer (411; 421; 431) mit einem vorbestimmten Bitmuster aufweisen oder nicht aufweisen.

5. Teilnehmerstation (10; 30; 50) nach einem der vorangehenden Ansprüche, wobei die Fehlerbehandlungseinrichtung (14) derart ausgestaltet ist, dass sie einen Fehlerrahmen (141) ausgibt, wenn die Prüfung durch die Prüfeinrichtung (12) ergibt, dass die empfangene Nachricht (41; 42; 43) für die Teilnehmerstation (10; 30; 50) bestimmt ist und die Fehlerbehandlungseinrichtung (14) einen Fehler der empfangenen Nachricht (41; 42; 43) erkennt.

6. Teilnehmerstation (10; 30; 50) nach einem der vorangehenden Ansprüche, wobei die Prüfeinrichtung (12) zur Ausgabe des in der Nachricht (41; 42; 43) umfassten Nachrichten-Identifizierers (411; 421; 431) der Teilnehmerstation (10; 30; 50) an die Kommunikationssteuereinrichtung (11) der Teilnehmerstation (10; 30; 50) ausgestaltet ist, um Zeitpunkte für ein Abtasten eines Bits der Nachricht (41; 42; 43) abhängig von dem in der Nachricht (41; 42; 43) umfassten Nachrichten-Identifizierer (411; 421; 431) der Teilnehmerstation (10; 30; 50) einzustellen.

7. Teilnehmerstation (10; 30; 50) nach einem der vorangehenden Ansprüche, wobei die Einrichtung (15) eine Sende-/Empfangseinrichtung ist, die zudem zum Senden einer Nachricht (41; 42; 43) über das Bussystem (1; 2) an mindestens eine weitere Teilnehmerstation des Bussystems (1; 2) ausgestaltet ist, wobei die Nachricht (41; 42; 43) ein vorbestimmtes Bitmuster im Nachrichten-Identifizierer (411; 421; 431) aufweist.

8. Bussystem (1; 2), mit
einer Busleitung (40), und
mindestens zwei Teilnehmerstationen (10; 20; 30; 50), welche über die Busleitung (4) derart miteinander verbunden sind, dass sie miteinander kommunizieren können,
wobei mindestens eine der mindestens zwei Teilnehmerstationen (10; 20; 30; 50) eine Teilnehmerstation (10; 30; 50) nach einem der vorangehenden Ansprüche ist

9. Verfahren zur Erhöhung der Datenrate eines Bussystems (1; 2), mit den Schritten
Empfangen, mit einer Sende-/Empfangseinrichtung (15) der Teilnehmerstation (10; 30; 50), von Nachrichten (41, 42, 43) von einer weiteren Teilnehmerstation des Bussystems (1; 2) über das Bussystem (1; 2), bei welchem Bussystem (1; 2) die Nachrichten jeweils einen Nachrichten-Identifizierer (411, 421, 431) haben,
Nutzung des Nachrichten-Identifizierers (411, 421, 431) zur Arbitrierung in der Arbitrierungsphase, wobei nach der Arbitrierung nur noch eine Teilnehmerstation der Teilnehmerstationen (10, 20, 30) Signale in der Form einer oder mehrerer der Nachrichten (41, 42, 43) auf eine Busleitung (40) sendet, so dass zumindest zeitweise ein exklusiver, kollisionsfreier Zugriff einer Teilnehmerstation (10, 20, 30, 50) auf eine Busleitung (40) des Bussystems (1; 2) gewährleistet ist,
Prüfen, mit einer Prüfeinrichtung (12), ob eine empfangene Nachricht (41, 42, 43) für die Teilnehmerstation (10; 30; 50) bestimmt ist oder nicht, und
Fehlerbehandeln, mit einer Fehlerbehandlungseinrichtung (14), der empfangenen Nachricht, nur wenn die Prüfung durch die Prüfeinrichtung (12) ergibt, dass die empfangene Nachricht (41, 42, 43) für die Teilnehmerstation (10; 30; 50) bestimmt ist, **gekennzeichnet durch** den folgenden Schritt:
Einstellen, durch eine Kommunikationssteuereinrichtung (11), des Zeitpunktes für ein Abtasten eines Bits der empfangenen Nachricht (41, 42, 43) abhängig von dem in der empfangenen Nachricht (41, 42, 43) umfassten Nachrichten-Identifizierer (411, 421, 431).

10. Verfahren nach Anspruch 10, wobei die Prüfeinrichtung (12) beim Ein- und Ausschalten der Fehlerbehandlungseinrichtung (14) eine Speichereinrichtung (13) verwendet, und wobei die Speichereinrichtung (13) oder eine weitere Speichereinrichtung (16) verwendet wird, wenn die empfangene Nachricht (41; 42; 43) auf ein Ausblenden von vorbestimmten empfangenen Nachrichten (41; 42; 43) für die Teilnehmerstationen (10, 20, 30) aus anderen Gründen als für die Fehlerbehandlung geprüft wird.

## Claims

1. Subscriber station (10; 30; 50) for a bus system (1; 2), having
a communication control device (11) for controlling communication of the respective subscriber station (10, 30, 50),
a transmitting/receiving device (15) for receiving messages (41, 42, 43) from at least one further subscriber station of the bus system (1; 2) via the bus system (1; 2),
in which bus system (1; 2) the messages each have a message identifier (411, 421, 431),
the message identifiers (411, 421, 431) being used for arbitration in the arbitration phase,
only one subscriber station of the subscriber stations (10, 20, 30) transmitting signals in the form of one or more of the messages (41, 42, 43) onto a bus line (40) after arbitration, with the result that exclusive, collision-free access of a subscriber station (10, 20, 30, 50) to the bus line (40) of the bus system (1; 2) is ensured at least temporarily,
a checking device (12) for checking whether or not a received message (41; 42; 43) is intended for the subscriber station (10; 30; 50), and
an error handling device (14) for handling errors in the received message (41; 42; 43) only if the check by the checking device (12) reveals that the received message (41; 42; 43) is intended for the subscriber station (10; 30; 50)
**characterized in that** the communication control device (11) sets times for sampling a bit of the received message (41, 42, 43) on the basis of the message identifier (411, 421, 431) included in the received message (41, 42, 43).

2. Subscriber station (10; 30; 50) according to Claim 1, the checking device (12) being configured to check whether the received message (41; 42; 43) has a predetermined bit pattern which comprises the fact that the received message (41; 42; 43) is intended for the subscriber station (10; 30; 50) or is not intended for the subscriber station (10; 30; 50).

3. Subscriber station (10; 30; 50) according to Claim 1 or 2, the checking device (12) being configured to the effect that it carries out its check on the basis of the message identifier (411; 421; 431) included in the received message (41; 42; 43).

4. Subscriber station (10; 30; 50) according to Claim 3, the checking device (12) being configured to the effect that, during its check, it hides messages (41; 42; 43) for the subscriber station (10; 30; 50) which have or do not have a message identifier (411; 421; 431) having a predetermined bit pattern.

5. Subscriber station (10; 30; 50) according to one of the preceding claims, the error handling device (14) being configured in such a manner that it outputs an error frame (141) if the check by the checking device (12) reveals that the received message (41; 42; 43) is intended for the subscriber station (10; 30; 50) and the error handling device (14) identifies an error in the received message (41; 42; 43).

6. Subscriber station (10; 30; 50) according to one of the preceding claims, the checking device (12) being configured to output the message identifier (411; 421; 431) of the subscriber station (10; 30; 50), which is included in the message (41; 42; 43), to the communication control device (11) of the subscriber station (10; 30; 50) in order to set times for sampling one bit of the message (41; 42; 43) on the basis of the message identifier (411; 421; 431) of the subscriber station (10; 30; 50) which is included in the message (41; 42; 43).

7. Subscriber station (10; 30; 50) according to one of the preceding claims, the device (15) being a transmitting/receiving device which is also configured to transmit a message (41; 42; 43) to at least one further subscriber station of the bus system (1; 2) via the bus system (1; 2), the message (41; 42; 43) having a predetermined bit pattern in the message identifier (411; 421; 431).

8. Bus system (1; 2) having
a bus line (40), and
at least two subscriber stations (10; 20; 30; 50) which are connected to one another via the bus line (4) in such a manner that they can communicate with one another,
at least one of the at least two subscriber stations (10; 20; 30; 50) being a subscriber station (10; 30; 50) according to one of the preceding claims.

9. Method for increasing the data rate of a bus system (1; 2), having the steps of
using a transmitting/receiving device (15) of the subscriber station (10; 30; 50) to receive messages (41, 42, 43) via the bus system (1; 2), in which bus system (1; 2) from a further subscriber station of the bus system (1; 2) the messages each have a message identifier (411, 421, 431), using the message identifier (411, 421, 431) for arbitration in the arbitration phase, only one subscriber station of the subscriber stations (410, 20, 30) transmitting signals in the form of one or more of the messages (41, 42, 43) onto a bus line (40) after arbitration, with the result that exclusive, collision-free access of a subscriber station (10, 20, 30, 50) to a bus line (40) of the bus system (1; 2) is ensured at least temporarily,
using a checking device (12) to check whether or not a received message (41, 42, 43) is intended for the subscriber station (10; 30; 50), and
using an error handling device (14) to handle errors in the received message only if the check by the checking device (12) reveals that the received message (41, 42, 43) is intended for the subscriber station (10; 30; 50), **characterized by** the following step:
setting, by means of a communication control device (11), the time for sampling a bit of the received message (41, 42, 43) on the basis of the message identifier (411, 421, 431) included in the received message (41, 42, 43).

10. Method according to Claim 10, the checking device (12) using a memory device (13) when switching the error handling device (14) on and off, and the memory device (13) or a further memory device (16) being used when the received message (41; 42; 43) is being checked for the hiding of predetermined received messages (41; 42; 43) for the subscriber stations (10, 20, 30) for reasons other than for error handling.

## Revendications

1. Poste d'abonné (10 ; 30 ; 50), destiné à un système de bus (1 ; 2), pourvu
d'un système de commande de la communication (11) pour la commande d'une communication du poste d'abonné (10 ; 30 ; 50) respectif,
d'un système émetteur/récepteur (15) pour la réception d'informations (41, 42, 43) de la part d'au moins un autre poste d'abonné du système de bus (1 ; 2) via le système de bus (1 ; 2), sur lequel système de bus (1 ; 2) les informations sont munies chacune d'un identifiant d'information (411, 421, 431), les identifiants d'information (411, 421, 431) étant utilisés pour l'arbitrage dans une phase d'arbitrage, après l'arbitrage, plus qu'un seul poste d'abonné parmi les postes d'abonnés (10, 20, 30) émettant des signaux sous la forme d'une ou de plusieurs des informations (41, 42, 43) sur une ligne de bus (40), de telle sorte qu'au moins temporairement, un accès exclusif, sans collision d'un poste d'abonné (10, 20, 30, 50) à la ligne de bus (40) du système de bus (1 ; 2) soit assuré,
d'un système de vérification (12), pour vérifier si une information (41 ; 42 ; 43) réceptionnée est destinée ou non au poste d'abonné (10 ; 30 ; 50) et
d'un système de traitement des erreurs (14), pour traiter les erreurs de l'information (41 ; 42 ; 43) réceptionnée, uniquement s'il résulte de la vérification par le système de vérification (12) que l'information (41 ; 42 ; 43) réceptionnée est destinée au poste d'abonné (10 ; 30 ; 50), **caractérisé en ce que** le système de commande de la communication (11) règle des moments pour un balayage d'un bit de l'information (41, 42, 43) réceptionnée, en fonction de l'identifiant d'information (411, 421, 431) englobé dans l'information (41, 42, 43) réceptionnée.

2. Poste d'abonné (10 ; 30 ; 50) selon la revendication 1, le système de vérification (12) étant conçu pour vérifier si l'information (41 ; 42 ; 43) réceptionnée comporte un modèle de bit prédéfini, lequel comprend que l'information (41 ; 42 ; 43) réceptionnée est destinée au poste d'abonné (10 ; 30 ; 50) ou n'est pas destinée au poste d'abonné (10 ; 30 ; 50).

3. Poste d'abonné (10 ; 30 ; 50) selon la revendication 1 ou 2, le système de vérification (12) étant conçu de sorte à procéder à sa vérification à l'aide de l'identifiant d'information (411 ; 421 ; 431) englobé dans l'information (41 ; 42 ; 43) réceptionnée.

4. Poste d'abonné (10 ; 30 ; 50) selon la revendication 3, le système de vérification (12) étant conçu de sorte à occulter lors de sa vérification des informations (41 ; 42 ; 43) pour le poste d'abonné (10 ; 30 ; 50) lesquelles comportent ou ne comportent pas un identifiant d'information (411 ; 421 ; 431) avec un modèle de bit prédéfini.

5. Poste d'abonné (10 ; 30 ; 50) selon l'une quelconque des revendications précédentes, le système de traitement des erreurs (14) étant conçu de sorte à délivrer une marge d'erreurs (141) s'il résulte de la vérification effectuée par le système de vérification (12) que l'information (41 ; 42 ; 43) réceptionnée est destinée au poste d'abonné (10 ; 30 ; 50) et que le système de traitement des erreurs (14) identifie une erreur dans l'information (41 ; 42 ; 43) réceptionnée.

6. Poste d'abonné (10 ; 30 ; 50) selon l'une quelconque des revendications précédentes, le système de vérification (12) étant conçu pour délivrer au système de commande de la communication (11) du poste d'abonné (10 ; 30 ; 50) l'identifiant d'information (411 ; 421 ; 431), englobé dans l'information (41 ; 42 ; 43), du poste d'abonné (10 ; 30 ; 50), pour régler des moments pour un balayage d'un bit de l'information (41 ; 42 ; 43), en fonction de l'identifiant d'information (411 ; 421 ; 431), englobé dans l'information (41 ; 42 ; 43), du poste d'abonné (10 ; 30 ; 50).

7. Poste d'abonné (10 ; 30 ; 50) selon l'une quelconque des revendications précédentes, le système (15) étant un système émetteur/récepteur qui est conçu par ailleurs pour émettre une information (41 ; 42 ; 43) via le système de bus (1 ; 2) à l'attention d'au moins un autre poste d'abonné du système de bus (1 ; 2), l'information (41 ; 42 ; 43) comportant un modèle de bit prédéfini dans l'identifiant d'information (411 ; 421 ; 431).

8. Système de bus (1 ; 2) pourvu
d'une ligne de bus (40) et
d'au moins deux postes d'abonnés (10 ; 20 ; 30 ; 50), lesquels sont connectés l'un à l'autre via la ligne de bus (4), de sorte qu'ils puissent communiquer l'un avec l'autre,
au moins l'un des au moins deux postes d'abonnés (10 ; 20 ; 30 ; 50) étant un poste d'abonné (10 ; 30 ; 50) selon l'une quelconque des revendications précédentes.

9. Procédé destiné à augmenter le débit de données d'un système de bus (1 ; 2), comportant les étapes consistant à
réceptionner, à l'aide d'un système émetteur/récepteur (15) du poste d'abonné (10 ; 30 ; 50), des informations (41 ; 42 ; 43) de la part d'un autre poste d'abonné du système de bus (1 ; 2) via le système de bus (1 ; 2), sur lequel système de bus (1 ; 2) les informations sont munies chacune d'un identifiant d'information (411 ; 421 ; 431),
utiliser l'identifiant d'information (411 ; 421 ; 431) pour l'arbitrage dans la phase d'arbitrage, après l'arbitrage, plus qu'un seul poste d'abonné parmi les postes d'abonnés (10, 20, 30) émettant des signaux sous la forme d'une ou de plusieurs des informations (41, 42, 43) sur une ligne de bus (40), de telle sorte qu'au moins temporairement, un accès exclusif, sans collision d'un poste d'abonné (10, 20, 30, 50) à la ligne de bus (40) du système de bus (1 ; 2) soit assuré,
vérifier à l'aide d'un système de vérification (12) si une information (41, 42, 43) réceptionnée est destinée ou non au poste d'abonné (10 ; 30 ; 50) et
traiter des erreurs, à l'aide d'un système de traitement des erreurs (14), de l'information réceptionnée, uniquement s'il résulte de la vérification par le système de vérification (12) que l'information (41, 42, 43) réceptionnée est destinée au poste d'abonné (10 ; 30 ; 50), **caractérisé par** l'étape suivante consistant à :
régler à l'aide d'un système de commande de la communication (11) le moment pour un balayage d'un bit de l'information (41, 42, 43) réceptionnée, en fonction de l'identifiant d'information (411, 421, 431) englobé dans l'information (41, 42, 43) réceptionnée.

10. Procédé selon la revendication 10, lors de la mise en marche et à l'arrêt du système de traitement des erreur (14), le système de vérification (12) utilisant un système de mémoire (13) et le système de mémoire (13) ou un autre système de mémoire (16) étant utilisé lorsque l'information (41 ; 42 ; 43) réceptionnée est vérifiée au niveau d'une occultation d'informations réceptionnées (41 ; 42 ; 43) prédéfinies pour les postes d'abonnés (10, 20, 30) pour d'autres motifs que le traitement d'erreurs.
